# EUROPEAN PATENT SPECIFICATION

(11) **EP 0 501 386 B1**
(45) Date of publication and mention of the grant of the patent: **25.01.1995**
(21) Application number: 92103076.3
(22) Date of filing: 24.02.1992
(51) Int. Cl.: F16B 21/20, F16B 7/04

(54) **Elastic connector**
Elastischer Verbinder
Connecteur élastique

(30) Priority: 25.02.1991 US 660021
(43) Date of publication of application: 02.09.1992
(73) Proprietor: Hsu, Li-jang, Taipei, R.O.C. (TW)
(72) Inventor: Hsu, Li-jang, Taipei, R.O.C. (TW)
(74) Representative: Glawe, Delfs, Moll & Partner

(56) References cited:
- DE-A- 2 342 703
- FR-A- 2 578 299

## Description

### BACKGROUND OF THE INVENTION

### 1. FIELD OF THE INVENTION

The invention relates to an elastic connector, which can be easily turned to tightly rapidly connect mechanical members together by means of the a S-shaped spring plate and two steel sheets controlled by a rotary control member, which can also be easily turned to set the mechanical members apart. The elastic connector presents mechanical parts from disconnection at the time of mechanical movement without the use of any locking washer.

### 2. BACKGROUND OF THE INVENTION

A bolt is a mechanical part most frequently used in various kinds of machinery, utensils, apparatus, and various tools which are used everyday in the household. It provides endless utilization. No matter what is its size or precision, no machinery can be built without it. On the other hand a bolt is often used in coordination with a screw nut. When it is being used, first pass the bolt through the hole of the unit of mechanical members which it intends to fix. Then, turn the screw nut onto the bolt with a spanner to fix the mechanical members together. Reversely, when the mechanical members have to be set apart, turn the screw nut off from the bolt with a spanner.

A screw nut will have to be turned for several rounds before it can be turned tightly onto or off from a bolt. Therefore, it is apparent that a screw nut is lacking of efficiency when it is being applied to fix or untie something. Secondly, it would be rather inconvenient to turn a screw nut tightly on or off with certain spanners, such as a ring spanner and an open spanner. Because it had to be entirely pulled off and sleeved back every time when it is turned. At the same time, a screw nut will easily be worn and thus cause the spanner to slip off from it. Moreover, when it becomes deadly rusty on the bolt, it can hardly be loosened from the bolt.

In DE-A-2 342 703 is disclosed the use of an S-shaped spring plate to secure a bolt.

### SUMMARY OF THE INVENTION

The object of this invention is to provide an elastic connector which is easy to operation in holding mechanical members tightly or setting them apart.

Another object of this invention is to provide an elastic connector which can hold mechanical members tightly. The aforementioned connector is able to prevent the screw nuts from loosening or falling off at the time of a mechanical movement without the need to additionally lock it up with a sliding plate ring.

Still another object of this invention is to provide an elastic connector to hold mechanical members tightly, the aforementioned connector can be easily taken off from the mechanical members without worrying that the screw nut will become deadly rusty on the bolt.

The technical contents and features through which this invention achieved the above-mentioned objects can be thoroughly understood by referring to the related diagrammatic drawings set below.

### BRIEF DESCRIPTION OF THE DRAWINGS

Fig. 1 is an elevational view of the preferred embodiment of the elastic connector of the present invention;
Fig. 2 is an exploded view thereof;
Fig. 3 is a cross section thereof taken along its longitudinal axis;
Fig. 4 is a bottom view thereof after the removal of the lid;
Fig. 5 is a cross seation taken along line 5-5 of Fig. 3, showing that the rod member is inserted through the elastic connector;
Fig. 6 is a cross section similar to Fig. 5, showing that the three openings of the S-shaped spring plate are obliquely aligned in retaining the rod member.

### DETAILED DESCRIPTION OF THE PREFERRED EMBODIMENT

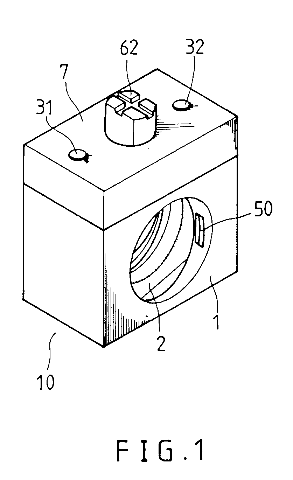

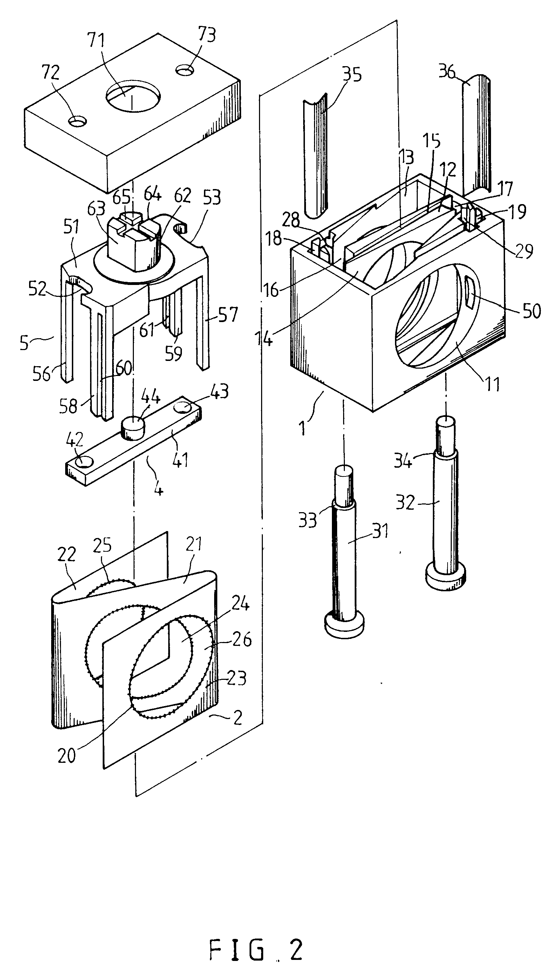

Referring to Figs. 1 and 2, an elastic connector 10 is shown and generally comprised of a base 1. The base 1 is made in a square shape, and comprised of a straight hollow hole 11 pierced through the front face to the back face thereof through which a rod member having the same outer diameter can pass. As alternative forms of the present invention, the base 1 of the elastic connector 10 may be made in any of a variety of geometric shapes.

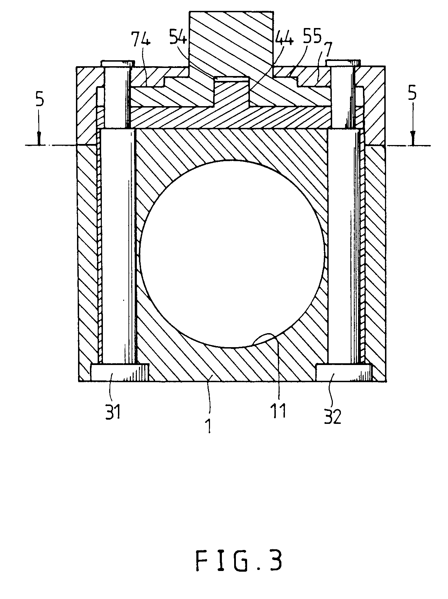

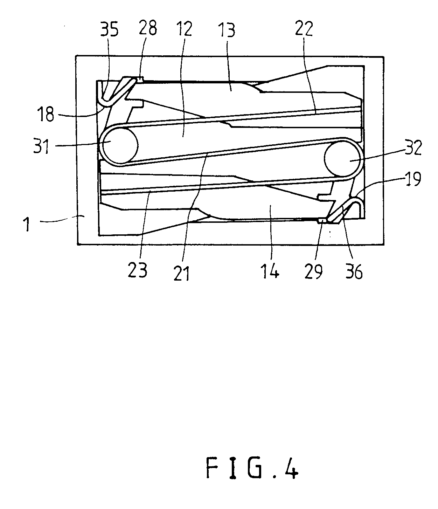

Referring to Figs. 3 through 6 and seeing Figs. 1 and 2 again, the hollow interior of the base 1 is equally divided into two wedge-shaped assembling grooves 13, 14 by a partition plate 12. A slanting groove 15 is made on the partition plate 12 for holding a S-shaped spring plate 2. When the S-shaped spring plate 2 is inserted into the base 1, the middle plate portion 21 thereof is engaged into the slanting groove 15 and firmly retained thereto and, the two opposite end plate portions 22, 23 thereof are respectively engaged into the assembling grooves 13, 14, and will further be carried to move by a control member 5. Holes 24, 25, 26 are respectively made on the middle and end plate portions 21, 22, 23 of the S-shaped spring 2, of which the size is equivalent to the hollow hole 11 on the base 1. When the S-shaped spring plate 2 is inserted into the base 1, it is compressed to keep the holes 24, 25, 26 thereon in line with the hollow hole 11 for inserting a rod member (see Fig. 4). The partition plate 12 has two longitudinal holes 16, 17 at two opposite locations matched with the slanting groove 15 for fastening two rivets 31, 32 permitting them to be in flush with the outer surface of the base 1 (see Fig. 3).

In order to strengthen the holding power of the elastic connector, stripes 20 are formed on the S-shaped spring plate2 around the holes 24, 25, 26 thereof, and therefore, the rod member which is inserted therein will be firmly retained in place. The shape of the holes 24, 25, 26 may be variously embodied. However, the shape of the hollow hole 11 on the base 1 should be altered properly according to the change of the shape of the holes 24, 25, 26. The holes on the S-shaped spring plate 2 shall be provided for inserting at least two rod members at the same time permitting them to be tightly retained by an elastic connector 10. In this case, the hollow hole on the base 1 should also be changed according to the modification of the S-shaped spring plate 2.

Referring to Fig. 2 again, the base 1 has an U-shaped groove 18 on the upper left corner thereof in one direction for inserting a steel sheet 35, and an U-shaped groove 19 on the lower right corner thereof in an opposite direction for inserting another steel sheet 36. Before having been fastened inside the base 1, the steel sheets 35, 36 are respectively formed in the shape like L (see Fig. 3). After installation, they are retained into an U-shaped form by a control member 5. By means of the spring force of the steel sheets 35, 36, the fixing rods 56, 57 of the control member 5 are respectively supported, causing the control member 5 to be firmly retained in a horizontal position, and therefore, the holes 24, 25, 26 on the S-shaped spring plate 2 are maintained in line for inserting a rod member. The function of the steel sheets 35, 36 is to control the control member 5 in place. There are holes 28, 29 adjacent to the U-shaped grooves 18, 19 at an inner side for moving the sheet steels 35, 36 as well as for inserting and moving the fixing rods 56, 57 of the control member 5.

In order to support the revolving motion of the control member 5, a supporting member 4 is set on the base 1. The supporting member 4 is comprised of a flat plate 41, the size of which is equivalent to the partition plate 12 in the base 1, with two small holes 42, 43 made on the two opposite ends thereof for inserting two rivets 31, 32, permitting the supporting member 4 to be mounted on the necks 33, 34 of the rivets 31, 32. Further, the supporting member 4 comprises an axle rod 44 raising from the center thereof for supporting the control member 5 permitting it to rotate thereon.

The control member 5 has a lower part fastened inside the base 1. It can be alternatively rotated back and forth in moving the two opposite end plate portions 22, 23 of the S-shaped spring plate 2. As shown in Fig. 2, the control member comprises a base plate 51 having two circular holes 52, 53 at two opposite ends thereof for inserting the rivets 52, 53 respectively. As shown in Fig. 3, the base plate 51 has an axle hole 54 on the bottom edge thereof for fastening the axle rod 44 of the supporting member 4. Therefore, the base plate 51 can be rotated around the axle rod 44 of the supporting member 4. The base plate 51 further comprises a recess 55 on the bottom edge for receiving the supporting member 4. The recess 5 is so made that the control member 5 can be rotated around the axle rod 44 of the supporting member 4. The base plate 51 also comprises two control rods 56, 57 at the upper left and lower right corners thereof respectively inserted into holes 18, 19 on the base 1. Therefore, rotating the control member 5 causes the fixing rods 56, 57 to alternatively move back and forth in the holes 18, 19, and therefore, the U-shaped spring plate 2 is compressed into U-shaped form or returned into L-shaped form.

The base plate 51 has two control rods 58, 59 at the upper left and lower right corners thereof respectively inserted into the assembling grooves 12, 13 of the base 1. Each control rod 58 or 59 has a gap 60 or 61 extended to the base plate 51 for inserting the two opposite end plate portions 22, 23 of the S-shaped spring plate 2. Rotating the control member 5 causes the two opposite end plate portions 22, 23 to extend outwards. The base plate 51 has a handle 62 upstanding therefrom at the center, which handle 62 comprises at least one set of planes 63, 64 for mounting a spanner in driving the control member 5 to rotate. The handle 62 may be made in a hexagonal shape or shaped like a quadratic prism. The handle 62 of the base plate 51 further comprises a crossed groove 65 for driving a screw driver in tightening or loosening the control member 5.

The elastic connector 10 further comprises a lid 7 having holes 71, 72, 73 for inserting the handle 61 and the rivets 31, 32. As shown in Fig. 3, the lid 7 has a concave chamber 74 on the bottom edge thereof for holding the base plate 51 of the control member 5. After the aforesaid parts having been assembled together, hammer down the plain ends of the rivets 31, 32 to form another heads so as fix the elastic connector 10 into shape (see Fig. 1), permitting the handle 62 to be exposed to the outside for operation, as shown in Fig. 1.

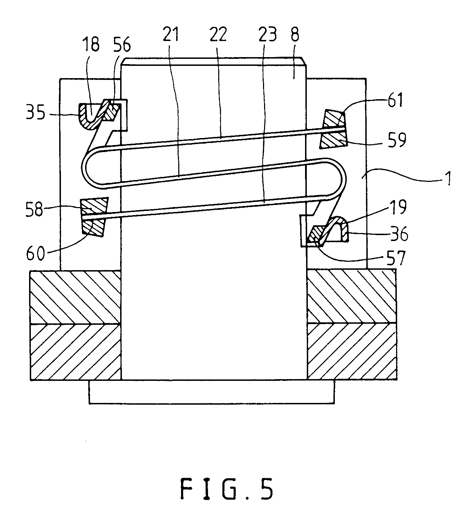

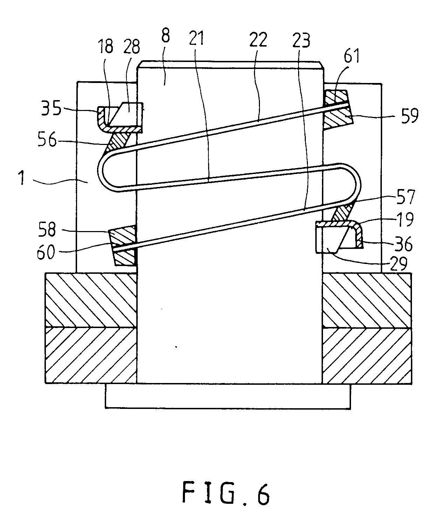

Referring to Figs. 5 and 6, the operation of the elastic connector 10 in fastening mechanical parts, is outlined hereinafter. Mount the elastic connector 10 onto the rod member 8, and use a spanner to rotate the handle 62. Rotating the handle 62 causes the control rods 58, 59 of the control member 5 to move the end plate portions 22, 23 of the S-shaped spring plate 2 outwards, permitting the holes 24, 25, 26 to be obliquely aligned in a line and respectively tightly stopped against the outer wall surface of the rod member 8 (see Fig. 6). Displacing the fixing rods 56, 57 causes steel sheets 35, 36 to return to their original L-shape, and therefore, the side edges of the steel sheets 35, 35 project through the window 50 on the hollow hole 11 to stop against the rod member 8, so as to further retain the control member 5 is position.

Loosening the elastic connector 10 is also easy. Rotating the control member 5 in a reverse direction causes the fixing rods 56, 57 to compress the steel sheets 35, 36 into an U-shape, and at the same time, causes the control rods 58, 59 to squeeze the two opposite end plate portions 22, 23 of the S-shaped spring plate 2 inwards, and therefore, the holes 24, 25, 26 on the S-shaped spring plate are arranged in line with the hollow hole 11 on the base 1 permitting the rod member 8 to be released from the constraint. Therefore, the elastic connector 10 can be easily removed from place to set the mechanical parts apart.

## Claims

1. For holding mechanical parts together, an elastic connector comprising:
a base (1), said base comprising a straight hole (11) through a front face thereof to a back face thereof, two wedge-shaped assembling grooves (13,14) separated by a partition plate (12) at the inside, a first U-shaped groove (18) at a corner thereof, a second U-shaped groove (19) invertedly disposed at a diagonally spaced corner thereof, said first and second U-shaped grooves each being connected to a hole (28,29), said partition plate comprising a pair of longitudinal holes (16,17) at two opposite ends thereof, said pair of longitudinal holes being connected to each other by a slanting groove (15);
a pair of rivets (31,32), said rivets being respectively inserted into said longitudinal holes (16,17) on said partition plate;
a S-shaped spring plate (2) fastened inside said base, said S-shaped spring plate comprised of a middle plate portion inserted in said slanting groove, and two opposite end plate portions respectively inserted into said assembling grooves (13,14), said middle and end plate portions each having a hole in shape and size similar to said hollow hole on said base;
a pair of steel sheets (35,36) respectively fastened in said first and second U-shaped grooves (18,19);
a supporting member (4), said supporting member having two small holes on two opposite ends thereof for inserting said rivets;
a control member (5), said control member comprising a base plate (51), said base plate comprising two circular holes (52,53) at two opposite ends thereof for inserting said rivets, a recess on a bottom edge thereof for holding said supporting member, two fixing rods at two corners thereof respectively inserted into holes in said base to compress said steel sheets into U-shaped forms, two control rods at other two corners thereof with gaps for inserting said S-shaped spring plate, and a handle (62) upstanding from a top edge thereof for rotating said control member by a tool;
a lid, said lid having holes for inserting said rivets and said handle respectively and a recess on a bottom edge thereof for holding said control member;
wherein rotating said control member causes said two end plate portions of said S-shaped spring plate to be respectively moved outwards by said control rods to permit an inserted rod member to be firmly retained to said S-shaped spring plate; displacement of said fixing rods allowing said steel plates to return to their original L-shape thus permitting them to laterally project through a window (50) into said hollow hole and stop against said rod member so as to firmly retain said control member in position.

2. The elastic connector of claim 1, wherein embossed stripes (20) are formed on said S-shaped spring plate around the holes thereon.

3. The elastic connector of claim 1, wherein the holes on said S-shaped spring plate are made in any of a variety of geometric shapes.

4. The elastic connector of claim 1, wherein said handle of said control member has at least two opposite planes for driving a spanner.

5. The elastic connector of claim 1, wherein said handle of said control member is made in the shape of a prism.

6. The elastic connector of claim 1, wherein said handle of said control member comprises a crossed groove on a top edge thereof.

7. The elastic connector of claim 1, wherein two holes may be respectively made on the base, the middle plate portions and each of the two end plate portions of the S-shaped spring plate in same size and shape for inserting two rod members.

8. The elastic connector of claim 1, wherein said window is formed at said hollow hole tangent to holes on said base.

## Patentansprüche

1. Elastischer Verbinder zum Zusammenhalten von mechanischen Teilen, der aufweist:
einen Hauptteil (1), welcher Hauptteil ein gerades Loch (11) durch seine Vorderfläche zu seiner Rückfläche, zwei keilförmige Montagenuten (13,14), die durch eine Trennplatte (12) im Innern getrennt sind, eine erste U-förmige Nut (18) an einer seiner Ecken und eine zweite U-förmige Nut (19) aufweist, die umgekehrt an seiner diagonal beabstandeten Ecke angeordnet ist, wobei die ersten und zweiten U-förmigen Nuten jeweils mit einem Loch (28,29) verbunden sind, wobei die Trennplatte zwei Längslöcher (16,17) an zwei ihrer gegenüberliegenden Enden aufweist, wobei die beiden Längslöcher miteinander durch eine geneigte Nut (15) verbunden sind;
zwei Nieten (31,32), welche Nieten in die Längslöcher (16,17) an der Trennplatte eingesetzt sind;
eine S-förmige Federplatte (2), die innerhalb des Hauptteils befestigt ist, welche S-förmige Federplatte einen mittleren Plattenabschnitt, der in die geneigte Nut eingesetzt ist, und zwei gegenüberliegende Plattenendabschnitte aufweist, die in die Montagenuten (13,14) eingesetzt sind, wobei der mittlere und die Plattenendabschnitte jeweils ein Loch aufweisen, das ähnliche Form und Größe wie das hohle Loch am Hauptteil hat;
zwei Stahlbleche (35,36), die in den ersten und zweiten U-förmigen Nuten (18,19) befestigt sind;
ein Stützglied (4), welches Stützglied zwei kleine Löcher an seinen zwei gegenüberliegenden Enden zum Einsetzen der Nieten aufweist;
ein Steuerglied (5), welches Steuerglied eine Grundplatte (51) aufweist, welche Grundplatte zwei kreisförmige Löcher (52,53) an ihren zwei gegenüberliegenden Enden zum Einsetzen der Nieten, eine Ausnehmung an ihrem unteren Rand zum Halten des Stützglieds, zwei Befestigungsstangen an zwei ihrer Ecken, die in Löcher in dem Hauptteil eingesetzt sind, um die Stahlbleche in U-Form zusammenzudrücken, zwei Steuerstangen an ihren zwei anderen Ecken mit Zwischenräumen zum Einsetzen der S-förmigen Federplatte, und ein Griffstück (62), das von ihrer Oberkante hochsteht, zum Drehen des Steuergliedes mit einem Werkzeug aufweist;
einen Deckel, welcher Deckel Löcher zum Einsetzen der Nieten und des Griffstücks und eine Ausnehmung an seinem unteren Rand zum Halten des Steuergliedes aufweist;
wobei Drehen des Steuergliedes bewirkt, daß die beiden Plattenendabschnitte der S-förmigen Federplatte durch die Steuerstangen nach außen bewegt werden, damit ein eingesetztes Stangenglied fest an der S-förmigen Federplatte festgehalten werden kann, wobei Versetzung der Befestigungsstangen es den Stahlblechen ermöglicht, in ihre ursprüngliche L-Form zurückzukehren, so daß sie seitlich durch ein Fenster (50) in das hohle Loch ragen und gegen das Stangenglied anliegen, um das Steuerglied fest in Stellung zu halten.

2. Elastischer Verbinder nach Anspruch 1, wobei eingeprägte Streifen (20) an der S-förmigen Federplatte um deren Löcher herum ausgebildet sind.

3. Elastischer Verbinder nach Anspruch 1, wobei die Löcher an der S-förmigen Federplatte irgendeine einer Vielzahl von geometrischen Formen haben.

4. Elastischer Verbinder nach Anspruch 1, wobei das Griffstück des Steuergliedes wenigstens zwei gegenüberliegende Ebenen zum Führen eines Schraubenschlüssels aufweist.

5. Elastischer Verbinder nach Anspruch 1, wobei das Griffstück des Steuergliedes die Form eines Prismas hat.

6. Elastischer Verbinder nach Anspruch 1, wobei das Griffstück des Steuergliedes eine gekreuzte Nut an seinem Oberrand aufweist.

7. Elastischer Verbinder nach Anspruch 1, wobei zwei Löcher an dem Hauptteil, den mittleren Plattenabschnitten und jedem der beiden Plattenendabschnitte der S-förmigen Federplatte in derselben Größe und Form zum Einsetzen von zwei Stangengliedern vorgesehen sein können.

8. Elastischer Verbinder nach Anspruch 1, bei dem das Fenster an dem hohlen Loch tangential zu den Löchern an dem Hauptteil ausgebildet ist.

## Revendications

1. Connecteur élastique pour maintenir ensemble des parties mécaniques, comprenant:
une base (1), ladite base comportant un trou rectiligne (11) qui la traverse entre une face avant et une face arrière, deux rainures d'assemblage en forme de coin (13, 14) séparées par une plaque de cloisonnement (12) disposée à l'intérieur, une première rainure en U (18) disposée dans un de ses angles, une seconde rainure en U (19) disposée en sens inverse dans son angle opposé en diagonale, lesdites première et seconde rainures en U étant chacune en communication avec un trou (28, 29), ladite plaque de cloisonnement comportant une paire de trous longitudinaux (16, 17) à ses deux extrémités opposées, ces deux trous longitudinaux étant reliés l'un à l'autre par une rainure oblique (15);
une paire de rivets (31, 32), lesdits rivets étant insérés respectivement dans lesdits trous longitudinaux (16, 17) dans ladite plaque de cloisonnement;
une feuille de ressort en S (2) fixée à l'intérieur de ladite base, ladite feuille de ressort en S se composent d'une partie formant plaque du milieu (21) insérée dans ladite rainure oblique (15) et de deux parties formant plaques d'extrémité opposées (22, 23) insérées respectivement dans lesdites rainures d'assemblage (13, 14), lesdites parties moyenne et d'extrémité de la feuille de ressort comportant chacune un trou (24, 25, 26) dont la forme et la taille sont semblables à celles dudit trou rectiligne (11) dans ladite base;
une paire de tôles d'acier (35, 36) fixées respectivement dans lesdites première et seconde rainures en U (18, 19);
un élément de support (4), ledit élément de support comportant deux petits trous (42, 43) à ses deux extrémités opposées pour l'insertion desdits rivets;
un élément de commande (5), ledit élément de commande comprenant une plaque d'appui (51), ladite plaque d'appui comportant deux trous circulaires (52, 53) à ses deux extrémités opposées pour l'insertion desdits rivets, un creux (55) du côté inférieur pour recevoir ledit élément de support (4), deux tiges de fixation (56, 57) dans deux de ses angles, insérées respectivement dans les rainures (18, 19) dans ladite base (1) pour comprimer lesdites tôles d'acier (35, 36) et leur donner la forme d'un U, deux tiges de commande (58, 59) dans ses deux autres angles, comportant des fentes (60, 61) pour l'insertion de ladite feuille de ressort en S, et une poignée (62) en saillie sur un côté supérieur, pour faire tourner ledit élément de commande au moyen d'un outil;
un couvercle (7) comportant des trous (72, 73, 71) pour l'insertion desdits rivets et de ladite poignée respectivement, et un creux (74) du côté inférieur pour recevoir ledit élément de commande (5);
une rotation dudit élément de commande ayant pour effet que les deux parties formant plaques d'extrémité de ladite feuille de ressort en S sont déplacées respectivement vers l'extérieur par lesdites tiges de commande afin de permettre qu'une barre insérée soit retenue solidement contre ladite feuille de ressort en S; et le déplacement desdites tiges de fixation ayant pour effet que lesdites tôles d'acier reprennent leur forme initiale en L, ce qui leur permet de faire saillie latéralement dans ledit trou rectiligne à travers une fenêtre (50) et de buter contre ladite barre, de façon à maintenir solidement en place ledit élément de commande.

2. Connecteur élastique selon la revendication 1, dans lequel des stries gravées en relief (20) sont formées sur ladite feuille de ressort en S autour des trous de celle-ci.

3. Connecteur élastique selon la revendication 1, dans lequel les trous dans ladite feuille de ressort en S sont réalisés avec l'une quelconque d'une variété de formes géométriques.

4. Connecteur élastique selon la revendication 1, dans lequel ladite poignée dudit élément de commande présente au moins deux plans opposés pour la mise en place d'une clef à écrous.

5. Connecteur élastique selon la revendication 1, dans lequel ladite poignée dudit élément de commande est réalisée avec la forme d'un prisme.

6. Connecteur élastique selon la revendication 1, dans lequel ladite poignée dudit élément de commande comporte une gorge cruciforme sur sa face supérieure.

7. Connecteur élastique selon la revendication 1, dans lequel deux trous ayant la même taille et la même forme peuvent être formés respectivement dans la base, dans la partie formant plaque du milieu et dans chacune des deux parties formant plaques d'extrémité de la feuille de ressort en S, pour l'insertion de deux barres.

8. Connecteur élastique selon la revendication 1, dans lequel ladite fenêtre est formée au niveau dudit trou rectiligne, tangentiellement aux trous dans ladite base.
